# EUROPEAN PATENT SPECIFICATION

(11) **EP 4 107 341 B1**
(45) Date of publication and mention of the grant of the patent: **10.09.2025**
(21) Application number: 21706573.9
(22) Date of filing: 18.02.2021
(51) Int. Cl.: E03F 5/10

(54) **SEPARATOR**
SEPARATOR
SÉPARATEUR

(30) Priority: 19.02.2020 GB 202002320
(43) Date of publication of application: 28.12.2022
(73) Proprietor: Hydro International Ltd, Clevedon BS21 6FT (GB)
(72) Inventor: JARMAN, Daniel Stuart, Bristol BS9 2RQ (GB); BOWDITCH, Mark Richard, Somerset TA5 1NW (GB); WALSH, Philip, Bristol BS4 2DP (GB)
(74) Representative: Haseltine Lake Kempner LLP
(86) International application number: PCT/EP2021/054070
(87) International publication number: WO 2021/165423

(56) References cited:
- FR-A1- 2 672 913
- US-A1- 2006 043 010
- US-A1- 2010 243 553
- US-A1- 2015 048 014
- US-B2- 8 771 505

## Description

The invention relates to an inlet module for a separator.

Conventional gullies under roadways and other paved areas comprise a chamber having inlet and outlet pipes which open into the chamber at a position above the bottom of the chamber. There may also be a top inlet, which provides access to the interior of the chamber through a grating provided at the roadway surface, for example in a gutter. In use, solids entering the chamber, whether from the inlet pipe or through the grating, collect under gravity in the base of the chamber and can be extracted at intervals by means of a suction pipe introduced into the chamber after removing the grating. Such gullies have a low separation efficiency. Furthermore, in the event of heavy storm flows, collected solids in the base of the chamber, and solids floating on the surface tend to be stirred up, and can pass into the outlet pipe.

A hydrodynamic vortex separator may be used to improve the separation efficiency of the gully. Such separators are suitable for removing sediment, litter and oil from surface water runoff.

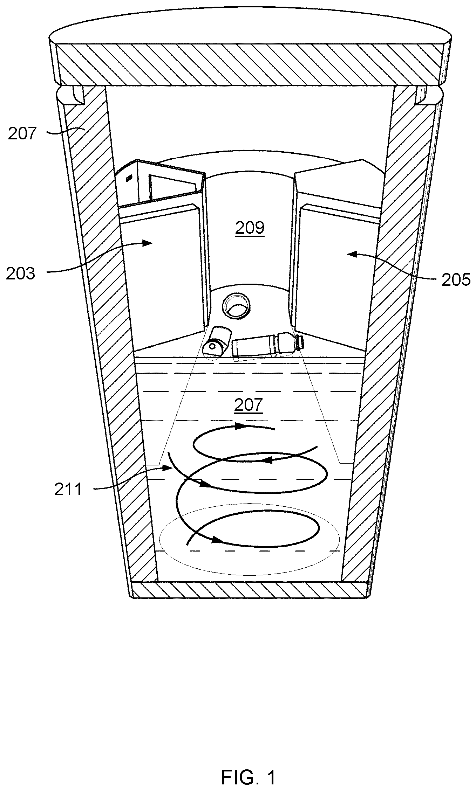

Figure 1 shows an example of a hydrodynamic vortex separator used in a stormwater gully, as disclosed in US Patent No. 7,344,636. The separator comprises an inlet compartment 203 and an outlet compartment 205 installed within a chamber 207. The inlet compartment 203 is connected to an inlet duct and the outlet compartment 205 is connected to an outlet duct. The inlet compartment 203 and the outlet compartment 205 are offset from one another around the circumference of the chamber 207 and are fluidically connected by a bypass duct 209.

An opening 211 is provided at the bottom of the inlet compartment 203 which serves as an inlet to the interior of the gully chamber 207. The inlet opening 211 is oriented so that inflowing liquid creates a circulating flow within the chamber 207 which assists in causing any solids within the incoming flow to accumulate and fall to the bottom of the chamber 207 or rise to the fluid surface depending upon their density. Similarly, the outlet compartment 205 has an opening which serves as an outlet from the interior of the chamber 207.

Although the bypass duct 209 may be cut to an appropriate length so that the inlet and outlet compartments 203, 205 align with the inlet and outlet ducts, the bypass duct 209 must be made available in different radii of curvature to conform to chambers having different diameters. Further, the size, number and position of the ducts is restricted by this arrangement and the inlet and outlet compartments 203, 205 and the bypass duct 209 limit the bypass capacity of the separator.

Document US2006/0043010A discloses a separator with an inlet module which module comprises a tangentially directed outlet.

It is therefore desirable to provide a separator that address or alleviate some or all of these issues.

In accordance with the present invention, there is provided a separator comprising an inlet module and a chamber defined by a chamber wall having a chamber wall opening, the inlet module comprising an attachment portion and a projecting portion extending from the attachment portion, wherein the attachment portion is configured to be coupled to the chamber wall and comprises an inlet for receiving into the inlet module liquid passing through the chamber wall opening, wherein the projecting portion comprises an outlet directed such that the liquid exits the inlet module and creates a circulating flow within the chamber about a central axis of the chamber, wherein the projecting portion is offset from the attachment portion such that a gap is formed between the projecting portion and the chamber wall through which the circulating flow can pass, wherein the projecting portion comprises a first wall defining the gap, a second wall opposing the first wall, a first side wall connecting the first and second walls at a first side of the inlet module and a second side wall opposing the first side wall and connecting the first and second walls at a second side of the inlet module, and wherein the second side wall and the first and second walls do not define an opening and the first side wall defines the outlet such that the outlet is directed tangentially with respect to the central axis and such that the liquid exits the inlet module in a tangential direction with respect to the central axis.

The first wall, the second wall, the first side wall and the second side wall define a passageway fluidically connecting the inlet to the outlet.

The cross-sectional area of the passageway may continuously decrease along at least a portion of the passageway between the inlet and the outlet.

The second side wall may curve towards the outlet in a direction towards the outlet such that the projecting portion converges toward the outlet on a first plane parallel to the chamber wall.

The curve of the second side wall towards the outlet may be convex.

The first wall may curve towards the outlet in a direction towards the outlet such that the projecting portion converges toward the outlet on a second plane perpendicular to the chamber wall.

The curve of the first wall towards the outlet may be concave.

The first wall may curve towards the first side wall and the second side wall on a third plane perpendicular to the chamber wall.

The curve of the first wall towards the first side wall and the second side wall may be convex.

The outlet may be defined at a distal end of the first side wall.

The attachment portion may comprise a first bypass opening. At least a portion of the first bypass opening may be disposed on an opposing side of the inlet to the outlet.

The attachment portion may comprise a second bypass opening. At least a portion of the first bypass opening may be disposed on an opposing side of the second bypass opening to the outlet.

The second bypass opening may be directed in the same direction as the outlet.

The separator may be further provided with an outlet module.

The separator may further comprise a further inlet module as described in any preceding statement. The outlet of the inlet module and the outlet of the further inlet module may be directed in the same tangential direction such that liquid exits the inlet module and the further inlet module in the same tangential direction and the circulating flow within the chamber is in a single rotational direction about the central axis of the chamber and passes around the entirety of the chamber.

For a better understanding of the present invention, and to show more clearly how it may be carried into effect, reference will now be made, by way of example, to the accompanying drawings, in which:
Figure 1 is a sectional view of a prior art separator;
Figure 2 is a perspective view of a separator;
Figure 3 is a first perspective view of an inlet module of the separator;
Figure 4 is a front view of the inlet module;
Figure 5 is a cross-sectional side view of the inlet module;
Figure 6 is a second perspective view of the inlet module;
Figure 7 is a bottom view of the inlet module;
Figure 8 is a first perspective view of an outlet module;
Figure 9 is a second perspective view of the outlet module;
Figure 10 is a flowchart of a method of manufacturing the separator;
Figure 11 shows a perspective view of an inlet module that may be obtained in the method; and
Figure 12 is a cross-sectional side view of the separator during operation.

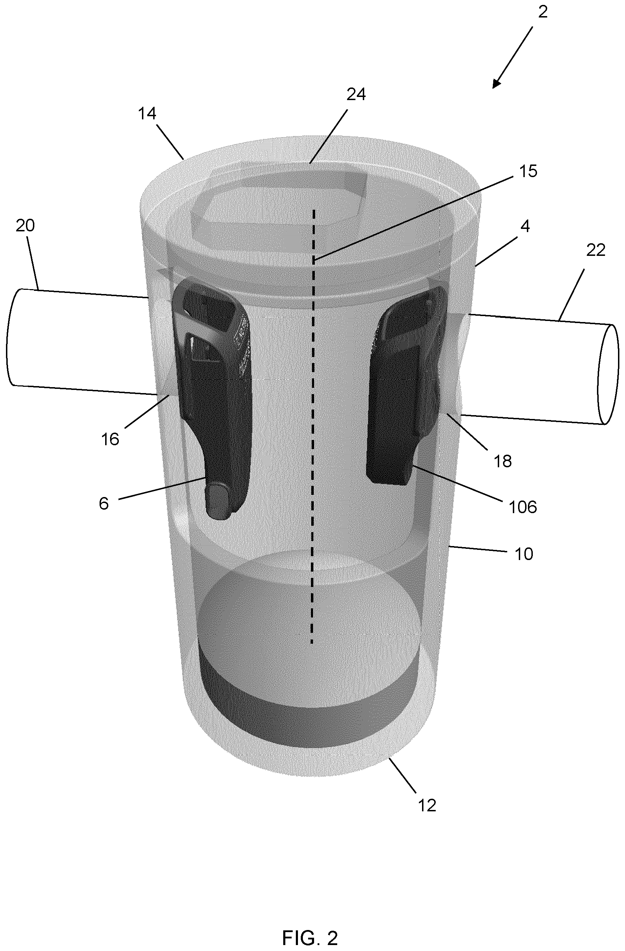

**Figure 2** shows a separator 2 comprising a chamber 4, an inlet module 6 and an outlet module 106. The chamber 4 is shown as being semi-transparent in Figure 2 in order to show the internal features of the separator 2. The chamber 4 comprises a side wall or chamber wall 10, a lower wall 12 and an upper wall 14. The chamber wall 10 is cylindrical and extends around a central axis 15. The chamber wall 10 has an inlet opening 16 and an outlet opening 18. An inlet conduit 20 is connected to the inlet opening 16 and an outlet conduit 22 is connected to the outlet opening 18. The upper wall 14 comprises a manhole 24 for accessing an interior of the chamber 4. The inlet module 6 and the outlet module 106 are disposed in the chamber 4, adjacent the inlet opening 16 and outlet opening 18, respectively. In the arrangement shown in Figure 2, the inlet module 6 and the outlet module 106 are located 180 degrees apart from each other in the chamber 4 (i.e. they are diametrically opposed).

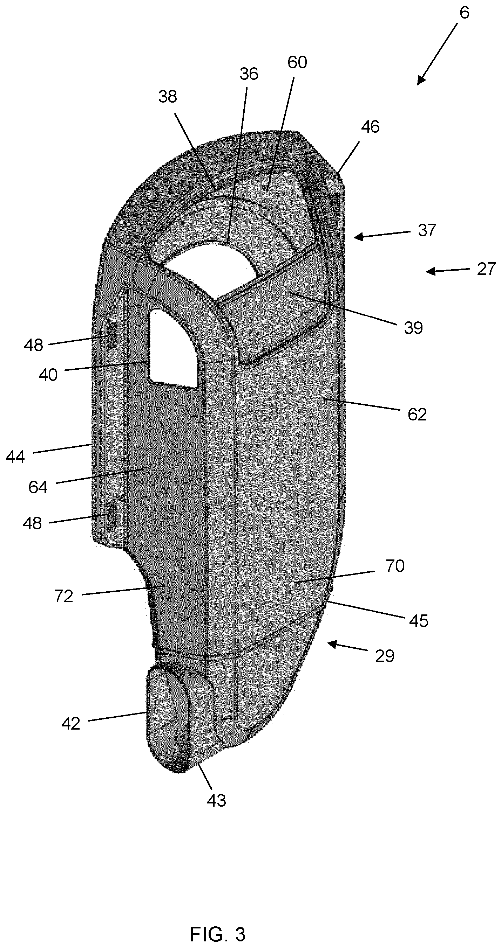

**Figure 3** is a first perspective view of the inlet module 6. The inlet module 6 comprises an attachment portion 27 and a projecting portion 29. As explained below in more detail, the attachment portion 27 attaches to the chamber wall 10. The projecting portion 29 projects (i.e. extends or protrudes) from the attachment portion 27.

The attachment portion 27 comprises a first wall 60, a second wall 62, a first side wall 64 and a second side wall 66 (not shown in Figure 3). The first wall 60 and the second wall 62 oppose each other, as do the first side wall 64 and the second side wall 66. The first wall 60 and the second wall 62 are connected together at opposing ends by the first side wall 64 and the second side wall 66. The first wall 60, the second wall 62, the first side wall 64 and the second side wall 66 are unitary.

The first wall 60 defines an inlet 36. A lower portion of the second wall 62 is substantially parallel to the first wall 60. An upper portion of the second wall 62 is angled towards an upper end of the first wall 60. The upper portion of the second wall 62 defines a first bypass region 37 comprising a first bypass opening 38 and a weir 39. The weir 39 is recessed and has an upper edge in the form of a reinforced rib that defines a lower edge of the first bypass opening 38. At least a portion of the first bypass opening 38 is disposed on an opposing side of the inlet 36 to an outlet 42 of the projecting portion 29. In particular, the outlet 42 is disposed on a lower side of the inlet 36 and the first bypass opening 38 is disposed on an upper side of the inlet 36. The inlet 36 is therefore disposed between the first bypass opening 38 and the outlet 42.

The first side wall 64 and the second side wall 66 are substantially planar. An upper portion of the first side wall 64 defines a second bypass opening 40. The first bypass opening 38 has a larger cross-sectional area than the second bypass opening 40. A first flange 44 and a second flange 46 extend outwards from the first side wall 64 and the second side wall 66, respectively. The first and second flanges 44, 46 form continuations of the first wall 60. The first and second flanges 44, 46 are provided with slots 48. The first and second flanges 44, 46 may alternatively be provided with holes.

The projecting portion 29 comprises a first wall 68 (not shown in Figure 3), a second wall 70, a first side wall 72 and a second side wall 74 (not shown in Figure 3). The first wall 68 and the second wall 70 oppose each other, as do the first side wall 72 and the second side wall 74. The first and second walls 68, 70 are continuous. That is, the first and second walls 68, 70 are uninterrupted and do not define openings. The first wall 68 and the second wall 70 are connected together at opposing ends by the first side wall 72 and the second side wall 74. The interfaces between the first wall 68, the second wall 70, the first side wall 72 and the second side wall 74 are rounded.

The second wall 70 of the projecting portion 29 is substantially planar and forms a continuation of the second wall 62 of the attachment portion 27. The second wall 70 of the projecting portion 29 is therefore substantially parallel to the first and second walls 60, 62 of the attachment portion 27.

The first side wall 72 is substantially planar and forms a continuation of the first side wall 64 of the attachment portion 27. A distal end or lower portion of the first side wall 72 defines the outlet 42. The outlet 42 is formed by a projecting flange 43 that extends beyond the remainder of the first side wall 72.

A reinforcing rib 45 extends around the projecting portion 29, between the attachment portion 27 and the outlet 42. In alternative arrangements, one or more ribs may extend around the projecting portion 29. In yet further alternative arrangements, the rib 45 may extend part way around the projecting portion 29 or may not be provided.

The first wall 60, the second wall 62, the first side wall 64 and the second side wall 66 of the attachment portion 27 and the first wall 68, the second wall 70, the first side wall 72 and the second side wall 74 of the projecting portion 29 define a fluid passageway fluidically connecting the inlet 36 to the outlet 42. The projecting portion 29 has a single inlet (i.e. only one inlet) and does not have a second inlet. The inlet to the projecting portion 29 is defined by the attachment portion 27 at the interface between the first wall 60, the second wall 62, the first side wall 64 and the second side wall 66 of the attachment portion 27 and the first wall 68, the second wall 70, the first side wall 72 and the second side wall 74 of the projecting portion 29. The interior geometry of the walls 60, 62, 64, 66, 68, 70, 72, 74 defining the fluid passageway substantially corresponds to the exterior geometry of the walls 60, 62, 64, 66, 68, 70, 72, 74.

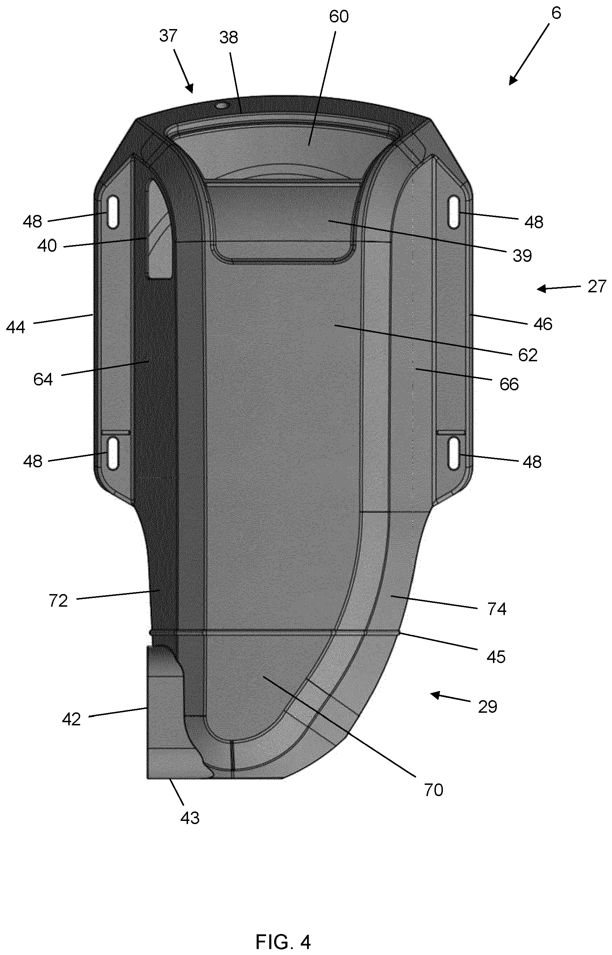

**Figure 4** is a front view of the inlet module 6. As shown, the first side wall 64 and the second side wall 66 are angled toward each other in a direction away from the first wall 60. In contrast to the first side wall 72, the second side wall 74 is continuous. That is, the second side wall 74 is uninterrupted and does not define an opening. Accordingly, the projecting portion 29 has a single outlet (i.e. only one outlet) and does not define a second outlet.

The second side wall 74 of the projecting portion 29 forms a continuation of the second side wall 66 of the attachment portion 27. The second side wall 74 curves towards the outlet 42 in a direction towards the outlet 42 (i.e. toward the distal end of the first side wall 72 or projecting portion 29). Accordingly, the projecting portion 29 converges toward the outlet 42 on a first plane A. As is also shown, the gradient of curvature increases toward the distal end of the first side wall 72 or projecting portion 29 such that the curve of the second side wall 74 on the first plane A is convex.

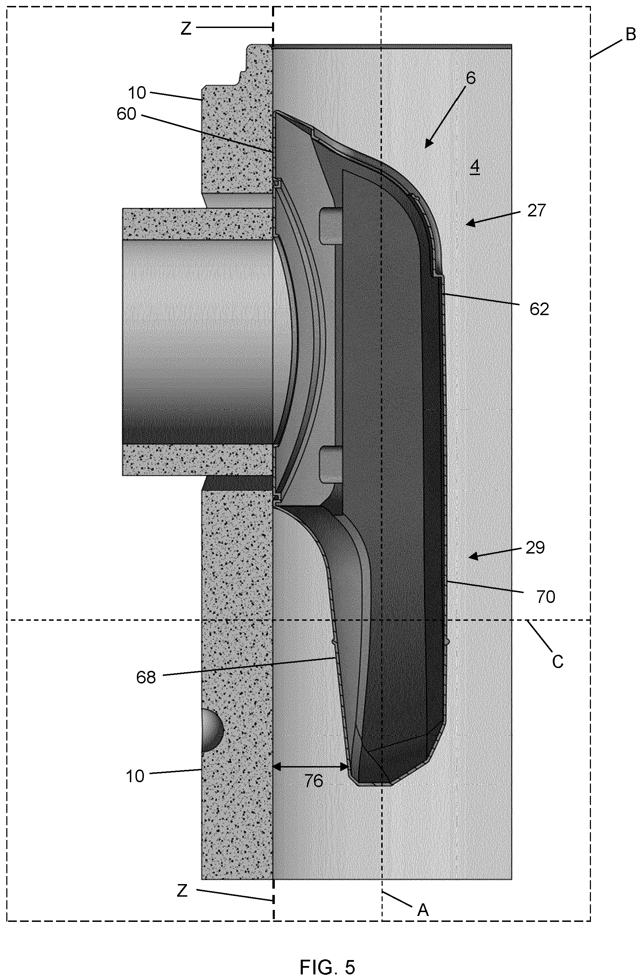

**Figure 5** is a first cross-sectional side view of the inlet module 6 located in situ within the chamber 4. The first wall 60 of the attachment portion 27 abuts and seals against the chamber wall 10. The projecting portion 29 is offset from the attachment portion 27. The attachment portion 27 extends in a first direction away from the inlet 36. The projecting portion 29 extends in a second direction substantially perpendicular to the first direction, away attachment portion 27 and towards the outlet 42. The attachment portion 27 and the projecting portion 29 thus form an L-shape. The first wall 68 of the projecting portion 29 is offset from a plane Z defined by the first wall 60 of the attachment portion 27. A gap or passageway 76 is formed between the projecting portion 29 and the chamber wall 10. The first wall 68 of the projecting portion 29 defines the gap 76.

As shown, an upper portion of the first wall 68 curves towards the outlet 42 in a direction towards the outlet 42 (i.e. toward the distal end of the first wall 68 or projecting portion 29). Accordingly, the upper portion of the projecting portion 29 converges toward the outlet 42 on a second plane B perpendicular to the first plane A. As is also shown, the gradient of curvature decreases toward the distal end of the first side wall 72 or projecting portion 29 such that the curve of the upper portion of the first wall 60 on the first plane B is concave. The lower portion (i.e. the distal end) of the first wall 68 of the projecting portion 29 is planar and is angled away from the plane Z, and, thus, the chamber wall 10, in a downward direction.

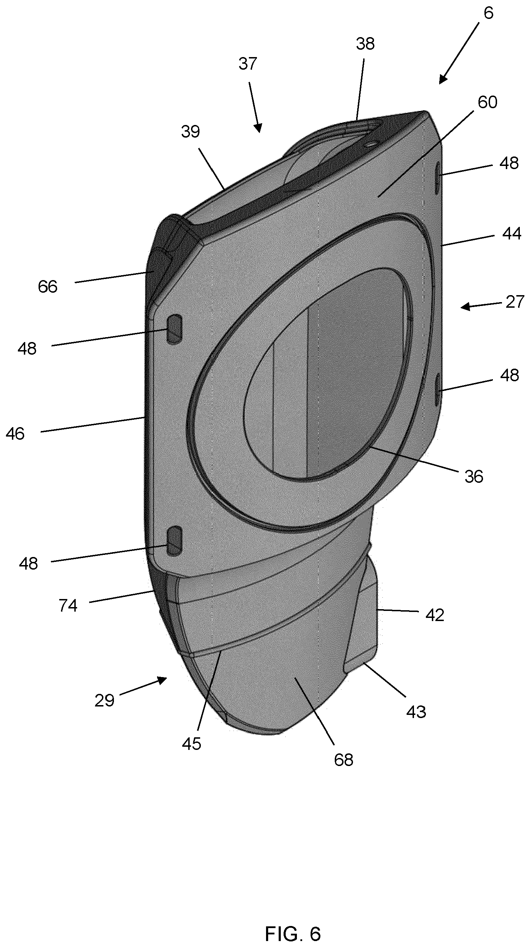

**Figure 6** is a second perspective view of the inlet module 6. The second side wall 66 of the attachment portion 27 is continuous and, in contrast to the first side wall 64, does not define a second bypass opening 40.

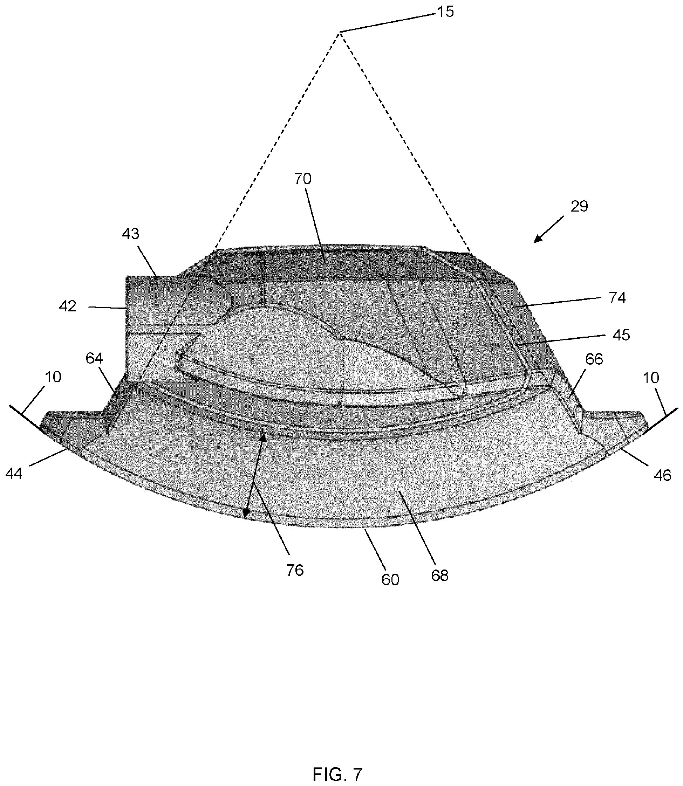

**Figure 7** is a bottom view of the inlet module 6 located in situ within the chamber 4. As mentioned above, the chamber wall 10 is cylindrical and extends around the central axis 15. As shown, the first wall 60 of the attachment portion 27 has a profile substantially corresponding to the interior of the chamber wall 10. Accordingly, the first wall 60 of the attachment portion 27 extends around an axis substantially corresponding to the central axis 15. As shown, the first side wall 64 and the second side wall 66 are angled toward the central axis 15.

The first wall 68 of the projecting portion 29 also extends around an axis substantially corresponding to the central axis 15. Accordingly, the first wall 68 curves towards the first and second side walls 72, 74 on a third plane C perpendicular to the first plane A and the second plane B. The curve is convex. The gap 76 formed between the projecting portion 29 and the chamber wall 10 has a substantially constant cross-sectional profile along its length. The cross-sectional profile of the projecting portion 29 taken along the third plane C has the shape of a hydrofoil or aerofoil.

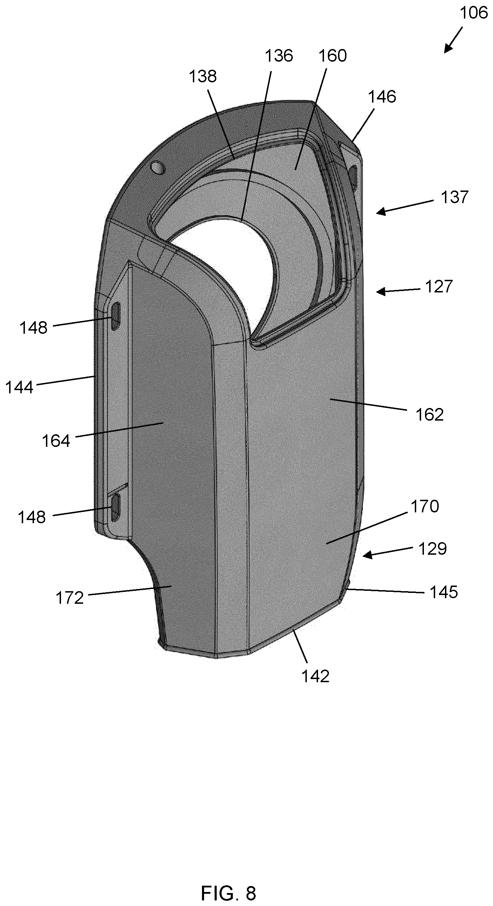

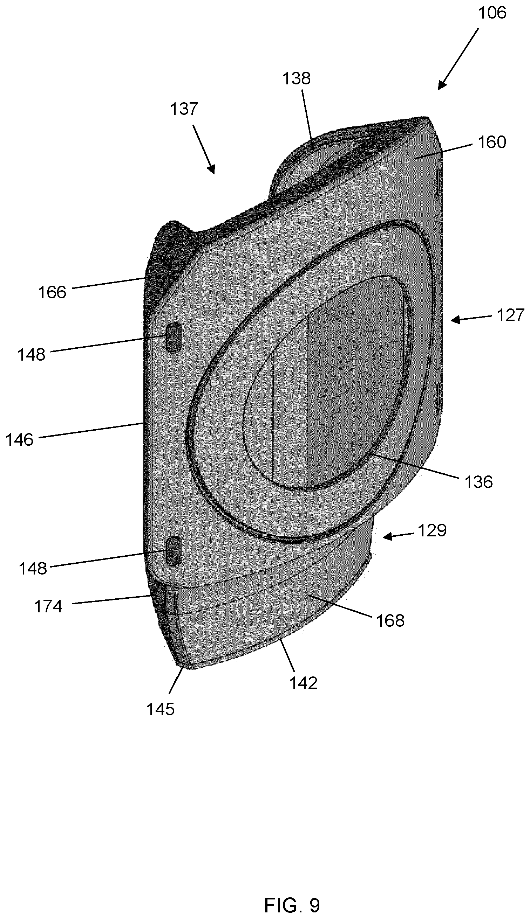

**Figures 8** and **9** are perspective views of the outlet module 106. The outlet module 106 comprises an attachment portion 127 and a projecting portion 129. As explained below in more detail, the attachment portion 127 attaches to the chamber wall 10. The projecting portion 129 projects (i.e. extends or protrudes) from the attachment portion 127.

The attachment portion 127 comprises a first wall 160, a second wall 162, a first side wall 164 and a second side wall 166 (not shown in Figure 8). The first wall 160 and the second wall 162 oppose each other, as do the first side wall 164 and the second side wall 166. The first wall 160 and the second wall 162 are connected together at opposing ends by the first side wall 164 and the second side wall 164. The first wall 160, second wall 162, first side wall 164 and second side wall 166 are unitary.

The first wall 160 defines an outlet 136. A lower portion of the second wall 162 is substantially parallel to the first wall 160. An upper portion of the second wall 162 is angled towards an upper end of the first wall 160. The upper portion of the second wall 162 defines a first bypass region 137 comprising a first bypass opening 138. In contrast to the first bypass region 37 of the inlet module 6, the first bypass region 137 of the outlet module 106 does not comprise a recessed weir portion.

The first side wall 164 and the second side wall 166 are substantially planar and angled toward each other. A first flange 144 and a second flange 146 extend outwards from the first side wall 164 and the second side wall 166, respectively. The first and second flanges 144, 146 form continuations of the first wall 160. The first and second flanges 144, 146 are provided with slots 148. The first and second flanges 144, 146 may alternatively be provided with holes.

The projecting portion 129 comprises a first wall 168, a second wall 170, a first side wall 172 and a second side wall 174 (not shown in Figures 8 and 9). The first wall 168 and the second wall 170 oppose each other, as do the first side wall 172 and the second side wall 174. The first and second walls 168, 170 are continuous. That is, the first and second walls 168, 170 are uninterrupted and do not define openings. The first wall 168 and the second wall 170 are connected together at opposing ends by the first side wall 172 and the second side wall 174. The interfaces between the first wall 168, the second wall 170, the first side wall 172 and the second side wall 174 are rounded.

The second wall 170 of the projecting portion 129 is substantially planar and forms a continuation of the second wall 162 of the attachment portion 127. The second wall 170 of the projecting portion 129 is therefore substantially parallel to the first and second walls 160, 162 of the attachment portion 127.

The first side wall 172 is substantially planar and forms a continuation of the first side wall 164 of the attachment portion 127. A distal end or lower portion of the first wall 168, the second wall 170, the first side wall 172, the first side wall 172 and the second side wall 174 define an inlet 142. A reinforcing rib 145 extends around the projecting portion 129, at the inlet 142.

The first wall 160, the second wall 162, the first side wall 164 and the second side wall 166 of the attachment portion 127 and the first wall 168, the second wall 170, the first side wall 172 and the second side wall 174 of the projecting portion 129 define a fluid passageway fluidically connecting the outlet 136 to the inlet 142. The interior geometry of the walls 160, 162, 164, 166, 168, 170, 172, 174 defining the fluid passageway substantially corresponds to the exterior geometry of the walls 160, 162, 164, 166, 168, 170, 172, 174.

At least a portion of the first bypass opening 138 is disposed on an opposing side of the outlet 136 to the inlet 142. In particular, the inlet 142 is disposed on a lower side of the outlet 136 and the first bypass opening 138 is disposed on an upper side of the outlet 136. The outlet 136 is therefore disposed between the first bypass opening 138 and the inlet 142.

The geometry of the outlet module 106 substantially corresponds to the geometry of the inlet module 6 described above. The projecting portion 129 is therefore offset from the attachment portion 127 such that a further gap or passageway is formed between the projecting portion 129 and the chamber wall 10 in the same manner as described previously with reference to the inlet module 6. The projecting portions 29, 129 are inline around the central axis 15. The geometry of the outlet module 106 differs from the geometry of the inlet module 6 in that the distal end of the projecting portion 129 terminates at the rib 145, rather than extending further away from the attachment portion 127. In addition, the features defining the inlet 36 of the inlet module 6 instead define the outlet 136 of the outlet module 106. Further, the inlet 142 is directed parallel to the central axis 15 of the chamber 4 rather than tangentially with respect to the central axis 15. In contrast to the inlet module 6, the outlet module 106 also does not comprise a second bypass opening.

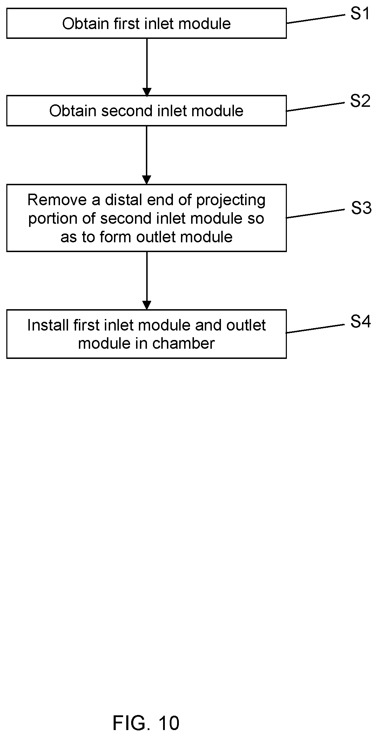

**Figure 10** is a flowchart of a method of manufacturing the separator 2. The inlet modules may be manufactured in a range of sizes, for example sizes suitable for a 1.0 metre diameter chamber 4, a 1.2 metre diameter chamber 4, a 1.5 metre diameter chamber 4, a 1.8 metre diameter chamber 4, a 2.0 metre diameter chamber 4, a 2.5 metre diameter chamber 4 and a 3.0 metre diameter chamber 4.

A first step S1 of the method comprises obtaining a first inlet module having a first size. For example, a first inlet module having a size suitable for a 1.2 metre diameter chamber 4 may be obtained. The first inlet module may correspond to the inlet module 6 described above.

A second step S2 of the method comprises obtaining a second inlet module 6 having a second size. The second size may be larger than the first size. The size of the second inlet module 6 may be the next largest size up in the range of sizes. Using the above example, a second inlet module 6 having a size suitable for a 1.5 metre diameter chamber 4 may be obtained. In alternative methods, the first and second sizes may be equal.

A third step S3 of the method comprises removing a distal end of the projecting portion of the second inlet module 6 so as to form an outlet module 106 as described above. The removal process may be any subtractive manufacturing process, such as cutting.

A fourth step S4 of the method comprises installing the inlet module 6 and the outlet module 106 in the chamber 4. For example, the inlet module 6 and the outlet module 106 may be attached to the chamber wall 10 of the chamber 4 by screws passing through the slots 48, 148. The inlet module 6 is positioned such that its inlet 36 is adjacent the inlet opening 16 of the chamber wall 10. The outlet module 106 is positioned such that its outlet 136 is adjacent the outlet opening 18 of the chamber wall 10. Since the inlet module 6 comprises a weir 39 but the outlet module 106 does not, the lower edge of the first bypass opening 138 of the outlet module 106 is lower than the lower edge of the first bypass opening 38 of the inlet module 6. Since inlet module 6 and the outlet module 106 are separate modules that are not directly connected to each other, they can be easily installed within chambers 10 of varying sizes.

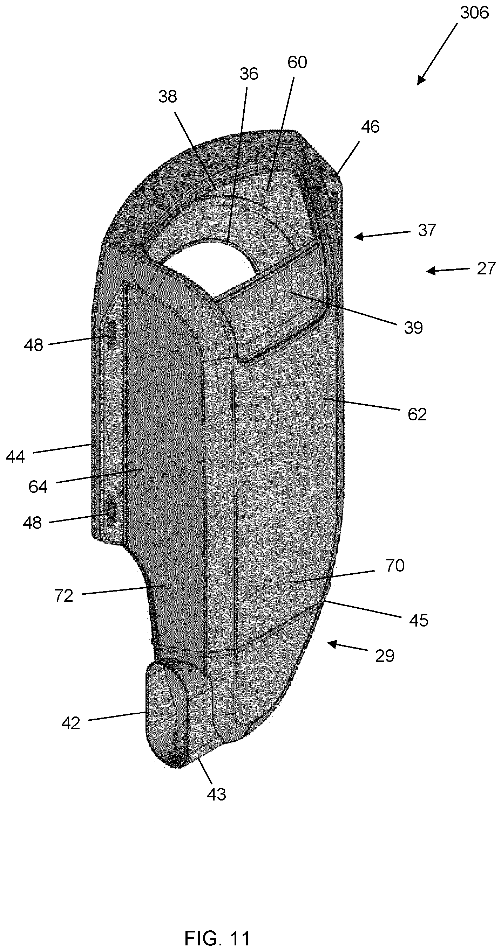

**Figure 11** shows an alternative inlet module 306 that may be obtained in the first step A1 and the second step S2 of the method. As shown, the inlet module 306 comprises a first bypass region 37 comprising a weir 39 but does not comprise a second bypass opening 40. An additional step may comprise forming the second bypass opening 40 of the first inlet module. The second bypass opening 40 may be formed in the first inlet module by any subtractive manufacturing process. A further additional step may comprise forming the first bypass opening 138 of the outlet module 106. The first bypass opening 138 of the outlet module 106 may be formed by removing the weir 39. The first bypass opening 138 of the outlet module 106 may be formed by any subtractive manufacturing process.

It will be appreciated that the order in which the steps S1, S2, S3, S4 are presented in Figure 10 is not limiting and is only a single example of many orders that would result in the manufacture of the separator 2. By way of example, the second inlet module 6 could be obtained before the first inlet module 6 is obtained. Further, the first inlet module 6 could be installed before the distal end of the projecting portion is removed from the second inlet module 6, or before the second inlet module 6 is obtained. Any of the additional steps outlined above could take place at any point during the method.

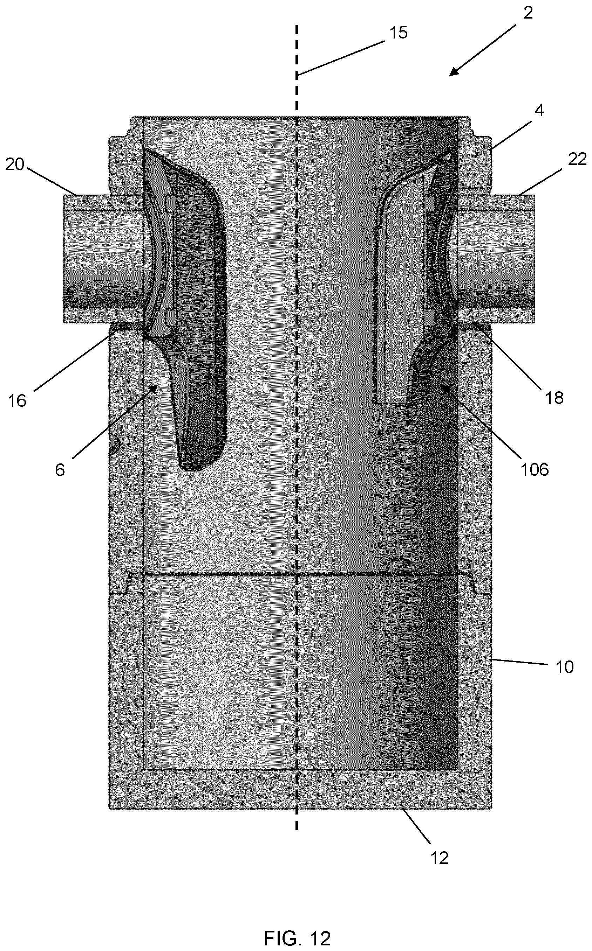

**Figure 12** is a cross-sectional side view of the separator 2 in use. During operation, liquid in the form of water flows through the inlet conduit 20, through the inlet opening 16 of the chamber wall 10, through the inlet 36 of the inlet module 6 and into the passageway defined by the walls 60, 62, 64, 66, 68, 70, 72, 74. The liquid passes along the passageway and out of the inlet module 6 via the outlet 42. The outlet 42 is directed tangentially with respect to the central axis 15. Accordingly, the liquid exits the inlet module 6 in a tangential direction with respect to the central axis 15 such that a circulating flow or vortex flow is stablished within the chamber 4. The circulating flow passes multiple times around the central axis 15 and flows around the entirety of the periphery of the chamber 4 (i.e. the flow does a complete loop of the chamber 4). This relatively low-energy circulating flow assists in causing any solids within the incoming flow to accumulate and fall to the bottom of the chamber 4 or rise to the fluid surface depending upon their density. Since a gap 76 is formed between the projecting portion 29 and the chamber wall 10, the circulating flow is able to pass uninterrupted and unobstructed through the gap 76, close to the chamber wall 10. This reduces the disruption to (i.e. weakening of) the circulating flow and reduces the generation of turbulence, thereby increasing the efficiency of solids removal. The streamlined hydrofoil or aerofoil shape of the projecting portion 29 helps to direct the flow and minimize turbulence or wake zones.

As mentioned above, the first side wall 72 defines the outlet 42 and the liquid passes along the passageway and exits the inlet module 6 via the outlet 42. The liquid exits the inlet module 6 in a first tangential direction with respect to the central axis 15, which, in the arrangements shown in Figures 2 and 12, is an anticlockwise direction when viewed from above. Since the second side wall 74 is continuous and does not comprise an opening, liquid is not able to exit the inlet module 6 by passing through the second side wall 74. Accordingly, the liquid does not exit the inlet module 6 in a second tangential direction opposing the first tangential direction. That is, the liquid does not exit the inlet module 6 in a clockwise direction when viewed from above. This ensures that the circulating flow within the chamber 4 circulates about a central axis 15 of the chamber 4 in a single rotational direction and passes around the entirety of the chamber 4. This also reduces the disruption to the circulating flow and reduces the generation of turbulence, thereby increasing the efficiency of solids removal.

The shape of the walls 60, 62, 64, 66, 68, 70, 72, 74, and, thus, the shape of the passageway defined by the walls 60, 62, 64, 66, 68, 70, 72, 74, encourages the flow of fluid through the inlet module 6, minimises turbulence and reduces head loss. Since the second side wall 74 is continuous and curves towards the outlet 42 in the manner described above, it acts to deflect (i.e. redirect) the flow of fluid from moving in an axial direction (i.e. parallel with the central axis 15) to moving in the tangential direction while minimising the generation of turbulence. The geometry of the second side wall 74 results in the cross-sectional area of the passageway decreasing in a continuous manner (i.e. in a non-stepwise manner) over a portion of its length. This increases the velocity of the fluid passing through the passageway, and, thus, out of the outlet 42. This improves the stability of the circulating flow within the chamber 4, and, thus, the efficiency of solids removal.

Once the level of the liquid in the chamber 4 rises to the level of the inlet 142 of the outlet module 106, it enters the outlet module 106, passes along the passageway defined by the walls 160, 162, 164, 166, 168, 170, 172, 174, exits the outlet module 106 via the outlet 136, passes out of the chamber 4 via the outlet opening 18 of the chamber wall 10 and flows away from the chamber 4 via the outlet conduit 22. Since the inlet 142 is directed downwards, parallel to the central axis 15 of the chamber 4 rather than tangentially with respect to the central axis 15, solids are less likely to enter the outlet chute 18. Since the inlet 142 has a larger cross-sectional area than the outlet 42, head loss is reduced.

Since a further gap is formed between the projecting portion 129 of the outlet module 106 and the chamber wall 10, the circulating flow is also able to pass through the further gap 76, close to the chamber wall 10. This has the aforementioned benefit of preventing weakening of the circulating flow. This also has the benefit of increasing the extent to which the circulating flow sweeps the inlet 142, which reduces the likelihood of solids entering the outlet module 106. The outlet module 106 and consequently the outlet duct 22, will therefore receive substantially clean water.

The second bypass opening 40 is positioned on the same level as the inlet 36. The second bypass opening 40 allows floatables such as plastic bottles entering the inlet module 6 to pass into the chamber 4. Passage of floatables out of the second bypass opening 40 into the chamber 4 is encouraged, since the second bypass opening 40 is directed in the same direction as the outlet 42 (i.e. in a downstream direction). Accordingly, floatables do not block the inlet module 6. Since the second side wall 44 of the inlet module 6 does not comprise a second bypass opening, the floatables are prevented from re-entering the inlet module 6. Further, since the outlet module 106 does not comprise an equivalent second bypass opening, floatables are prevented from entering the outlet module 106 during normal use, and the quality of the water exiting the chamber 4 via the outlet module 106 is maintained.

During storm flow conditions, the first bypass opening 38 of the inlet unit 6 allows overflow water to pass out of the first bypass opening 38 of the inlet unit 6 and into the chamber 4, and the presence of the second bypass opening 138 of the outlet unit 106 allows overflow water to pass out of the chamber 4 into the outlet unit 106 via the second bypass opening 138. Since the lower edge of the first bypass opening 138 of the outlet module 106 is lower than the lower edge of the first bypass opening 38 of the inlet module 6, water is able to exit the chamber 4 via the first bypass opening 138 despite the effects of head loss.

In alternative arrangements, the outlet unit 106 may not be provided with a first bypass opening 138. In order to ensure enough flow is able to pass through the outlet unit 106 during storm conditions, a larger outlet unit 106 may be selected.

Although it has been described that the module 6 and the outlet module 106 are located 180 degrees apart from each other in the chamber 4, this need not be the case. In alternative arrangements, the module 6 and the outlet module 106 may be spaced less than 180 degrees apart from each other in the chamber 4. The outlet module 106 may be spaced closer to the second side wall 74 than the first side wall 72. In alternative arrangements, the outlet module 106 may be spaced closer to the first side wall 72 than the second side wall 74.

Although it has been described that the first walls, the second walls, the first side walls and the second side walls are unitary (i.e. that they are formed from a single body), they may alternatively be formed by separate, distinct bodies that are joined to each other.

Although it has been described that the separator 2 comprises a single inlet module 6, the separator 2 may alternatively comprise a plurality of inlet modules 6. Alternatively or additionally, although it has been described that the separator 2 comprises a single outlet module 106, the separator 2 may comprise a plurality of outlet modules 106. In arrangements in which the separator 2 comprises a plurality of inlet modules 6, the geometry of each of the inlet modules 6 may be the same or substantially the same. In arrangements in which the separator 2 comprises a plurality of inlet modules 6, the outlets 42 of each of the inlet modules 6 are oriented in the same tangential direction such that liquid exits the inlet module 6 and the further inlet module 6 in the same tangential direction and the circulating flow within the chamber 4 is in a single rotational direction about the central axis 15 of the chamber 4 and passes around the entirety of the chamber 4. Accordingly, each inlet module 6 contributes to and does not diminish the circulating flow within the chamber 4. In addition, the inlet modules 6 may be located at the same or substantially the same level within the chamber 4 and thus be inline. Accordingly, the flow from each inlet module 6 is directed behind the adjacent inlet module 6 and outlet module 106, thereby maintaining a circulating flow path and minimizing wake zones. More than two inlet modules 6 may be provided.

In alternative arrangements, features of the separator 2 may be mirrored such that the liquid exits the inlet module 6 in a clockwise direction when viewed from above.

## Claims

1. A separator (2) comprising an inlet module (6) and a chamber (4) defined by a chamber wall (10) having a chamber wall opening (16), the inlet module (6) comprising an attachment portion (27) and a projecting portion (29) extending from the attachment portion (27), wherein the attachment portion (27) is configured to be coupled to the chamber wall (10) and comprises an inlet (36) for receiving into the inlet module (6) liquid passing through the chamber wall opening (16), wherein the projecting portion (29) comprises an outlet (42) directed such that the liquid exits the inlet module (6) and creates a circulating flow within the chamber (4) about a central axis (15) of the chamber (4), wherein the projecting portion (29) is offset from the attachment portion (27) such that a gap (76) is formed between the projecting portion (29) and the chamber wall (10) through which the circulating flow can pass, wherein the projecting portion (29) comprises a first wall (68) defining the gap (76), a second wall (70) opposing the first wall (68), a first side wall (72) connecting the first and second walls (68, 70) at a first side of the inlet module (6) and a second side wall (74) opposing the first side wall (72) and connecting the first and second walls (68, 70) at a second side of the inlet module (6), wherein the first wall (68), the second wall (70), the first side wall (72) and the second side wall (74) define a passageway fluidically connecting the inlet (36) to the outlet (42), and wherein the second side wall (74) and the first and second walls (68, 70) do not define an opening and the first side wall (72) defines the outlet (42) such that the outlet (42) is directed tangentially with respect to the central axis (15) and such that the liquid exits the inlet module (6) in a tangential direction with respect to the central axis (15).

2. A separator (2) as claimed in claim 1, wherein the cross-sectional area of the passageway continuously decreases along at least a portion of the passageway between the inlet (36) and the outlet (42).

3. A separator (2) as claimed in claim 1 or 2, wherein the second side wall (74) curves towards the outlet (42) in a direction towards the outlet (42) such that the projecting portion (29) converges toward the outlet (42) on a first plane (A) parallel to the chamber wall (10).

4. A separator (2) as claimed in claim 3, wherein the curve of the second side wall (74) towards the outlet (42) is convex.

5. A separator (2) as claimed in any preceding claim, wherein the first wall (68) curves towards the outlet (42) in a direction towards the outlet (42) such that the projecting portion (29) converges toward the outlet (42) on a second plane (B) perpendicular to the chamber wall (10), wherein optionally the curve of the first wall (68) towards the outlet (42) is concave.

6. A separator (2) as claimed in any preceding claim, wherein the first wall (68) curves towards the first side wall (72) and the second side wall on a third plane (C) perpendicular to the chamber wall (10), wherein optionally the curve of the first wall (68) towards the first side wall (72) and the second side wall (74) is convex.

7. A separator (2) as claimed in any preceding claim, wherein the outlet (42) is defined at a distal end of the first side wall (72).

8. A separator (2) as claimed in any preceding claim, wherein the first side wall (72) does not curve on a plane parallel to the chamber wall (10).

9. A separator (2) as claimed in any preceding claim, wherein the attachment portion (27) comprises a first bypass opening (38), wherein at least a portion of the first bypass opening (38) is disposed on an opposing side of the inlet (36) to the outlet (42), wherein optionally the attachment portion (27) comprises a second bypass opening (40), wherein at least a portion of the first bypass opening (38) is disposed on an opposing side of the second bypass opening (40) to the outlet (42), wherein optionally the second bypass opening (40) is directed in the same direction as the outlet (42).

10. A separator (2) as claimed in any preceding claim, wherein the separator (2) further comprises an outlet module (106), wherein the chamber wall (10) has a further chamber wall opening (18), wherein the outlet module (106) comprises a further attachment portion (127) and a further projecting portion (129) extending from the further attachment portion (127), wherein the further projecting portion (129) comprises a further inlet (142) for receiving into the outlet module (106) liquid in the chamber (4), wherein the further attachment portion (127) is configured to be coupled to the chamber wall (10) and comprises a further outlet (136), wherein the further chamber wall opening (18) is configured to receive liquid from the outlet module (106) via the further outlet (136), wherein the further projecting portion (129) is offset from the further attachment portion (127) such that a further gap is formed between the further projecting portion (129) and the chamber wall (10) through which the circulating flow can pass.

11. A separator (2) as claimed in claim 10, wherein the separator (2) further comprises a further inlet module (6) as claimed in any preceding claim, wherein the outlet (42) of the inlet module (6) and the outlet (42) of the further inlet module (6) are directed in the same tangential direction such that liquid exits the inlet module (6) and the further inlet module (6) in the same tangential direction and the circulating flow within the chamber (4) is in a single rotational direction about the central axis (15) of the chamber (4) and passes around the entirety of the chamber (4).

## Patentansprüche

1. Abscheider (2), umfassend ein Einlassmodul (6) und eine Kammer (4), die durch eine Kammerwand (10) mit einer Kammerwandöffnung (16) definiert ist, wobei das Einlassmodul (6) einen Befestigungsabschnitt (27) und einen Vorsprungsabschnitt (29), der sich von dem Befestigungsabschnitt (27) erstreckt, umfasst, wobei der Befestigungsabschnitt (27) dazu ausgelegt ist, mit der Kammerwand (10) gekoppelt zu sein, und einen Einlass (36) zur Aufnahme von durch die Kammerwandöffnung (16) verlaufender Flüssigkeit in dem Einlassmodul (6) umfasst, wobei der Vorsprungsabschnitt (29) einen Auslass (42) umfasst, der derart ausgerichtet ist, dass die Flüssigkeit aus dem Einlassmodul (6) austritt und eine Kreislaufströmung in der Kammer (4) um eine Mittelachse (15) der Kammer (4) erzeugt, wobei der Vorsprungsabschnitt (29) von dem Befestigungsabschnitt (27) derart versetzt ist, dass ein Spalt (76) zwischen dem Vorsprungabschnitt (29) und der Kammerwand (10) ausgebildet wird, durch den die Kreislaufströmung verlaufen kann, wobei der Vorsprungsabschnitt (29) eine erste Wand (68), die den Spalt (76) definiert, eine der ersten Wand (68) entgegengesetzte zweite Wand (70), eine erste Seitenwand (72), welche die erste und zweite Wand (68, 70) an einer ersten Seite des Einlassmoduls (6) verbindet, und eine zweite Seitenwand (74), der der ersten Seitenwand (72) entgegengesetzt ist und die erste und zweite Wand (68, 70) an einer zweiten Seite des Einlassmoduls (6) verbindet, umfasst, wobei die erste Wand (68), die zweite Wand (70), die erste Seitenwand (72) und die zweite Seitenwand (74) einen Durchgang definieren, der den Einlass (36) mit dem Auslass (42) in Fluidverbindung bringt, und wobei die zweite Seitenwand (74) und die erste und zweite Wand (68, 70) keine Öffnung definieren und die erste Seitenwand (72) den Auslass (42) definiert, sodass der Auslass (42) in Bezug zur Mittelachse (15) tangential ausgerichtet ist und sodass die Flüssigkeit in eine tangentiale Richtung in Bezug zur Mittelachse (15) aus dem Einlassmodul (6) austritt.

2. Abscheider (2) nach Anspruch 1, wobei die Querschnittsfläche des Durchgangs entlang zumindest eines Abschnitts des Durchgangs zwischen dem Einlass (36) und dem Auslass (42) stetig abnimmt.

3. Abscheider (2) nach Anspruch 1 oder 2, wobei die zweite Seitenwand (74) zum Auslass (42) in eine Richtung zum Auslass (42) gekrümmt ist, sodass der Vorsprungsabschnitt (29) zum Auslass (42) in einer ersten Ebene (A) parallel zur Kammerwand (10) zusammenläuft.

4. Abscheider (2) nach Anspruch 3, wobei die Krümmung der zweiten Seitenwand (74) zum Auslass (42) konvex ist.

5. Abscheider (2) nach einem der vorstehenden Ansprüche, wobei die erste Wand (68) zum Auslass (42) in eine Richtung zum Auslass (42) gekrümmt ist, sodass der Vorsprungsabschnitt (29) zum Auslass (42) in einer zweiten Ebene (B) senkrecht zur Kammerwand (10) zusammenläuft, wobei optional die Krümmung der ersten Wand (68) zum Auslass (42) konkav ist.

6. Abscheider (2) nach einem der vorstehenden Ansprüche, wobei die erste Wand (68) zur ersten Seitenwand (72) und zweiten Seitenwand in einer dritten Ebene (C) senkrecht zur Kammerwand (10) gekrümmt ist, wobei optional die Krümmung der ersten Wand (68) zur ersten Seitenwand (72) und zweiten Seitenwand (74) konvex ist.

7. Abscheider (2) nach einem der vorstehenden Ansprüche, wobei der Auslass (42) an einem distalen Ende der ersten Seitenwand (72) definiert ist.

8. Abscheider (2) nach einem der vorstehenden Ansprüche, wobei die erste Seitenwand (72) nicht in einer Ebene parallel zur Kammerwand (10) gekrümmt ist.

9. Abscheider (2) nach einem der vorstehenden Ansprüche, wobei der Befestigungsabschnitt (27) eine erste Bypassöffnung (38) umfasst, wobei zumindest ein Abschnitt der ersten Bypassöffnung (38) auf einer dem Auslass (42) entgegengesetzten Seite des Einlasses (36) angeordnet ist, wobei optional der Befestigungsabschnitt (27) eine zweite Bypassöffnung (40) umfasst, wobei zumindest ein Abschnitt der ersten Bypassöffnung (38) auf einer dem Auslass (42) entgegengesetzten Seite der zweiten Bypassöffnung (40) angeordnet ist, wobei optional die zweite Bypassöffnung (40) in dieselbe Richtung wie der Auslass (42) ausgerichtet ist.

10. Abscheider (2) nach einem der vorstehenden Ansprüche, wobei der Abscheider (2) ferner ein Auslassmodul (106) umfasst, wobei die Kammerwand (10) eine weitere Kammerwandöffnung (18) aufweist, wobei das Auslassmodul (106) einen weiteren Befestigungsabschnitt (127) und einen weiteren Vorsprungsabschnitt (129), der sich von dem weiteren Befestigungsabschnitt (127) erstreckt, umfasst, wobei der weitere Vorsprungsabschnitt (129) einen weiteren Einlass (142) zur Aufnahme von Flüssigkeit in der Kammer (4) im Auslassmodul (106) umfasst, wobei der weitere Befestigungsabschnitt (127) dazu ausgelegt ist, mit der Kammerwand (10) gekoppelt zu sein und einen weiteren Auslass (136) umfasst, wobei die weitere Kammerwandöffnung (18) dazu ausgelegt ist, eine Flüssigkeit vom Auslassmodul (106) über den weiteren Auslass (136) zu empfangen, wobei der weitere Vorsprungsabschnitt (129) von dem weiteren Befestigungsabschnitt (127) derart versetzt ist, dass ein weiterer Spalt zwischen dem weiteren Vorsprungsabschnitt (129) und der Kammerwand (10) ausgebildet wird, durch den die Kreislaufströmung verlaufen kann.

11. Abscheider (2) nach Anspruch 10, wobei der Abscheider (2) ferner ein weiteres Einlassmodul (6) nach einem der vorstehenden Ansprüche umfasst, wobei der Auslass (42) des Einlassmoduls (6) und der Auslass (42) des weiteren Einlassmoduls (6) in dieselbe tangentiale Richtung ausgerichtet sind, sodass Flüssigkeit aus dem Einlassmodul (6) und dem weiteren Einlassmodul (6) in dieselbe tangentiale Richtung austritt und die Kreislaufströmung in der Kammer (4) in eine einzelne Drehrichtung um die Mittelachse (15) der Kammer (4) und durch die gesamte Kammer (4) verläuft.

## Revendications

1. Séparateur (2) comprenant un module d'entrée (6) et une chambre (4) définie par une paroi de chambre (10) ayant une ouverture de paroi de chambre (16), le module d'entrée (6) comprenant une partie de fixation (27) et une partie saillante (29) s'étendant à partir de la partie de fixation (27), dans lequel la partie de fixation (27) est configurée pour être accouplée à la paroi de chambre (10) et comprend une entrée (36) pour la réception dans le module d'entrée (6) de liquide passant à travers l'ouverture de paroi de chambre (16), dans lequel la partie saillante (29) comprend une sortie (42) dirigée de telle sorte que le liquide sorte du module d'entrée (6) et crée un écoulement circulant dans la chambre (4) autour d'un axe central (15) de la chambre (4), dans lequel la partie saillante (29) est décalée de la partie de fixation (27) de sorte qu'un espace (76) est formé entre la partie saillante (29) et la paroi de chambre (10) à travers lequel l'écoulement circulant peut passer, dans lequel la partie saillante (29) comprend une première paroi (68) définissant l'espace (76), une seconde paroi (70) opposée à la première paroi (68), une première paroi latérale (72) reliant les première et seconde parois (68, 70) au niveau d'un premier côté du module d'entrée (6) et une seconde paroi latérale (74) opposée à la première paroi latérale (72) et reliant les première et seconde parois (68, 70) au niveau d'un second côté du module d'entrée (6), dans lequel la première paroi (68), la seconde paroi (70), la première paroi latérale (72) et la seconde paroi latérale (74) définissent un passage reliant fluidiquement l'entrée (36) à la sortie (42), et dans lequel la seconde paroi latérale (74) et les première et seconde parois (68, 70) ne définissent pas d'ouverture et la première paroi latérale (72) définit la sortie (42) de sorte que la sortie (42) est dirigée tangentiellement par rapport à l'axe central (15) et que le liquide sort du module d'entrée (6) dans une direction tangentielle par rapport à l'axe central (15).

2. Séparateur (2) selon la revendication 1, dans lequel l'aire en section transversale du passage diminue continuellement le long d'au moins une partie du passage entre l'entrée (36) et la sortie (42).

3. Séparateur (2) selon la revendication 1 ou 2, dans lequel la seconde paroi latérale (74) s'incurve vers la sortie (42) dans une direction vers la sortie (42) de telle sorte que la partie saillante (29) converge vers la sortie (42) sur un premier plan (A) parallèle à la paroi de chambre (10).

4. Séparateur (2) selon la revendication 3, dans lequel la courbe de la seconde paroi latérale (74) vers la sortie (42) est convexe.

5. Séparateur (2) selon l'une quelconque des revendications précédentes, dans lequel la première paroi (68) s'incurve vers la sortie (42) dans une direction vers la sortie (42) de telle sorte que la partie saillante (29) converge vers la sortie (42) sur un deuxième plan (B) perpendiculaire à la paroi de chambre (10), dans lequel facultativement la courbe de la première paroi (68) vers la sortie (42) est concave.

6. Séparateur (2) selon l'une quelconque des revendications précédentes, dans lequel la première paroi (68) s'incurve vers la première paroi latérale (72) et la seconde paroi latérale sur un troisième plan (C) perpendiculaire à la paroi de chambre (10), dans lequel facultativement la courbe de la première paroi (68) vers la première paroi latérale (72) et la seconde paroi latérale (74) est convexe.

7. Séparateur (2) selon l'une quelconque des revendications précédentes, dans lequel la sortie (42) est définie à une extrémité distale de la première paroi latérale (72).

8. Séparateur (2) selon l'une quelconque des revendications précédentes, dans lequel la première paroi latérale (72) ne s'incurve pas sur un plan parallèle à la paroi de chambre (10).

9. Séparateur (2) selon l'une quelconque des revendications précédentes, dans lequel la partie de fixation (27) comprend une première ouverture de dérivation (38), dans lequel au moins une partie de la première ouverture de dérivation (38) est disposée sur un côté opposé de l'entrée (36) relativement à la sortie (42), dans lequel facultativement la partie de fixation (27) comprend une seconde ouverture de dérivation (40), dans lequel au moins une partie de la première ouverture de dérivation (38) est disposée sur un côté opposé de la seconde ouverture de dérivation (40) relativement à la sortie (42), dans lequel facultativement la seconde ouverture de dérivation (40) est orientée dans la même direction que la sortie (42).

10. Séparateur (2) selon l'une quelconque des revendications précédentes, dans lequel le séparateur (2) comprend en outre un module de sortie (106), dans lequel la paroi de chambre (10) a une autre ouverture de paroi de chambre (18), dans lequel le module de sortie (106) comprend une autre partie de fixation (127) et une autre partie saillante (129) s'étendant à partir de l'autre partie de fixation (127), dans lequel l'autre partie saillante (129) comprend une autre entrée (142) pour la réception dans le module de sortie (106) de liquide situé dans la chambre (4), dans lequel l'autre partie de fixation (127) est conçue pour être accouplée à la paroi de chambre (10) et comprend une autre sortie (136), dans lequel l'autre ouverture de paroi de chambre (18) est conçue pour recevoir du liquide du module de sortie (106) via l'autre sortie (136), dans lequel l'autre partie saillante (129) est décalée par rapport à l'autre partie de fixation (127) de sorte qu'un autre espace est formé entre l'autre partie saillante (129) et la paroi de chambre (10) à travers lequel l'écoulement circulant peut passer.

11. Séparateur (2) selon la revendication 10, le séparateur (2) comprenant en outre un autre module d'entrée (6) selon l'une quelconque des revendications précédentes, dans lequel la sortie (42) du module d'entrée (6) et la sortie (42) de l'autre module d'entrée (6) sont orientées dans la même direction tangentielle de sorte que le liquide sort du module d'entrée (6) et de l'autre module d'entrée (6) dans la même direction tangentielle et que l'écoulement circulant dans la chambre (4) s'effectue dans une seule direction de rotation autour de l'axe central (15) de la chambre (4) et passe autour de la totalité de la chambre (4).
